# EUROPEAN PATENT SPECIFICATION

(11) **EP 3 432 068 B1**
(45) Date of publication and mention of the grant of the patent: **04.11.2020**
(21) Application number: 18184762.5
(22) Date of filing: 20.07.2018
(51) Int. Cl.: F21S 10/02, G03B 23/10, G03B 21/54

(54) **LASER PROJECTION DEVICE**
LASER-PROJEKTIONSVORRICHTUNG
DISPOSITIF DE PROJECTION LASER

(30) Priority: 21.07.2017 TW 106124667
(43) Date of publication of application: 23.01.2019
(73) Proprietor: Chen, Chih-Lung, 220 New Taipei City (TW); Chen, Chih-Ming, 220 New Taipei City (TW)
(72) Inventor: Chen, Chih-Lung, 220 New Taipei City (TW); Chen, Chih-Ming, 220 New Taipei City (TW)
(74) Representative: Bandpay & Greuter

(56) References cited:
- WO-A1-2017/054823
- CN-A- 106 402 719
- NL-C1- 1 035 398
- US-A- 5 685 097
- US-A1- 2007 296 923
- US-A1- 2012 176 782
- US-A1- 2017 038 032

## Description

### FIELD OF INVENTION

The present invention relates to a laser projection device, in particular to the laser projection device capable of projecting animation images.

### BACKGROUND OF INVENTION

### 1. Description of the Related Art

In festivals, people usually celebrate the festivals by decorating their home to create holiday atmosphere. Such a habit is very common in Europe and America particularly in Christmas. People often use a variety of lamps such as common LED Christmas light strings or decorations to decorate their home. However, the installation or removal of the LED Christmas light strings takes much time, and the light strings may not be lit occasionally for the reason of a poor connection, or accidents or injuries may even occur during the installation or removal. Therefore, laser projection devices are introduced to the market to replace the conventional LED light strings in recent years. As long as the laser projection device is set up, the effect of projecting the light can be achieved.

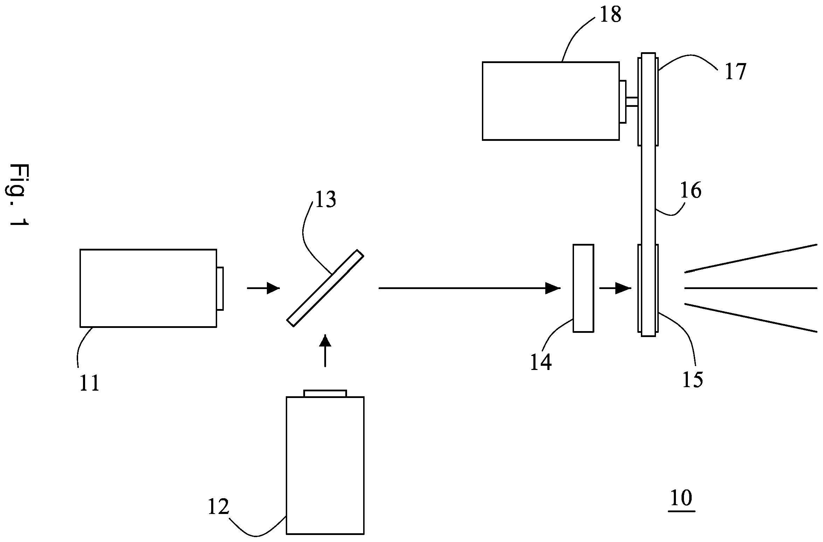

With reference to FIG. 1 for a schematic view of a conventional laser projection device, the laser projection device 10 has two light sources 11, 12 that project different color light sources to a mirror 13, so that the light sources can be combined and projected onto a first lens 14, and the light may pass through the first lens 14 and a second lens 15 and project to the outside to produce a lighting effect. The laser projection device 10 further comprises a motor 18 coupled to a driving member 16 through a turntable 17 for rotating the second lens 15, so that the projected image can be rotated to create a visual effect of moving the image.

The architecture of the conventional laser projection device 10 has existed in the market and not been changed for years. Although such architecture provides the visual effect, there are still some drawbacks. For example, the conventional laser projection device 10 only has monotonous fixed images. Although, the moving effect can be produced by using the motor 18, the image is still monotonous and unable to provide the animation effect.

Other examples of conventional laser projection devices are disclosed in WO 2017/054823, US 2007/296923, CN106402719, NL 1035398, US 5685097 and US 2017038032.

### 2. Summary of the Invention

Therefore, it is a primary objective of the present invention to overcome the aforementioned drawbacks by providing a laser projection device capable of changing the design related to the positions of figures of the grating sheets to generate and project animation images.

To achieve the aforementioned and other objectives, the present invention provides a laser projection device, as defined in independent claim 1, comprising a laser light source module, a grating module, a first periscope and a motor. The laser light source module is provided for emitting a light. The grating module which is a ring structure comprising a plurality of grating sheets disposed at an edge of the grating module. The periscope is provided for receiving and projecting the light to an inner periphery of the grating module, so that the light can pass through the grating sheet. The motor is coupled to the grating module for rotating the grating module. Wherein, the grating sheet has a figure which is a continuous figure, and the grating sheet is arranged onto the grating module continuously and sequentially according to the figure.

In the laser projection device, the laser light source module comprises a first color light source, a second color light source and a bandpass filter. The first color light source is provided for emitting a first color light, and the second color light source is provided for emitting a second color light, wherein the direction of the second color light is different from that of the first color light. The bandpass filter receives the first color light and the second color light which are mixed to form the light.

In the laser projection device, the first color light source and the second color light source emit different color lights.

In the laser projection device, the first color light is a red light, the second color light is a green light, and the light is an orange light.

The laser projection device further comprises a plurality of heat sinks.

In the laser projection device, the grating module further comprises at least a grating sheet rail disposed at an edge of the grating module.

In the laser projection device, the first periscope further comprises an entrance and an exit, and the laser projection device further comprises a stepper motor coupled to the exit and provided for shifting the exit.

In the laser projection device, the stepper motor is coupled to the exit through a gear mechanism.

The laser projection device further comprises a bottom plate, and the radial direction of the grating module is parallel to the bottom plate.

The laser projection device further comprises a bottom plate, and the radial direction of the grating module is perpendicular to the bottom plate.

The present invention further provides a laser projection device, as defined in independent claim 12, comprising a grating module, a laser light source module and a motor. The grating module is a ring structure comprising at least a grating sheet, and the grating sheet disposed at an edge of the grating module. The laser light source module is provided for emitting at least a light, and the grating module surrounds the laser light source module, and the light passes through the grating sheet. The motor is coupled to the grating module for rotating the grating module. Wherein, the grating sheet has a plurality of figures, and each figure of the grating sheet is a continuous figure, and the grating sheet is arranged onto the grating module continuously and sequentially according to the figure.

In the laser projection device, the laser light source module comprises a first color light source and a second color light source. The first color light source is provided for emitting a first color light. The second color light source is provided for emitting a second color light.

The laser projection device further comprises a plurality of heat sinks disposed at the periphery of the laser light source module.

### BRIEF DESCRIPTION OF THE FIGURES

FIG. 1 is a schematic view of a conventional laser projection device;
FIG. 2A is a schematic view of a laser projection device in accordance with a first embodiment of the present invention;
FIG. 2B is a top view of some components of the present invention;
FIG. 2C is a side view of some components of the present invention;
FIG. 3A is a schematic view of a grating module in accordance with a first embodiment of the present invention;
FIG. 3B is a schematic view of installing a grating sheet of the present invention;
FIGS. 4A to 4C are schematic views of a grating module in accordance with a second embodiment of the present invention;
FIG. 5A is a schematic view of a laser projection device in accordance with a third embodiment of the present invention;
FIG. 5B is a top view of a laser projection device of the present invention;
FIG. 6 is a schematic view of a laser projection device housing of the present invention; and
FIGS. 7A to 7C are schematic views of a laser projection device in accordance with a fourth embodiment of the present invention.

### DESCRIPTION OF THE PREFERRED EMBODIMENTS

To make it easier for our examiner to understand the objective, technical characteristics, structure, innovative features, and performance of the invention, we use preferred embodiments together with the attached figures for the detailed description of the invention. It is intended that the embodiments and figures disclosed herein are to be considered illustrative rather than restrictive.

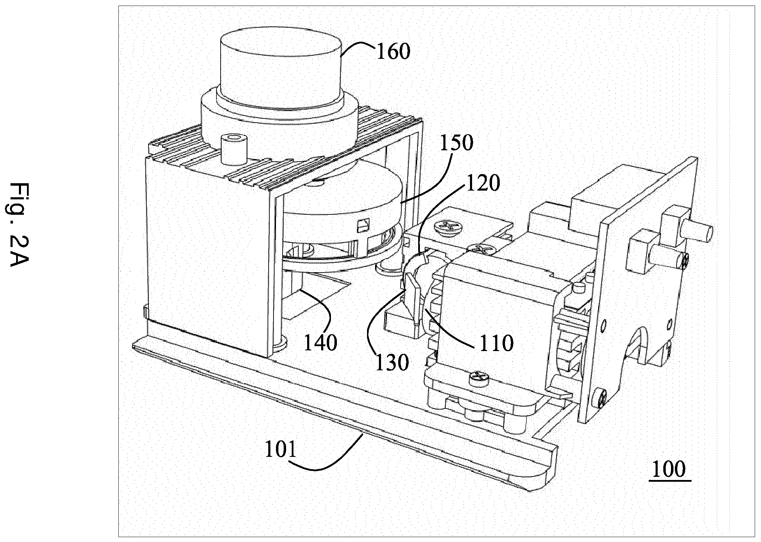

With reference to FIG. 2A for a schematic view of a laser projection device in accordance with the first embodiment of the present invention, the laser projection device 100 comprises a laser light source module, a first periscope 140, a grating module 150, and a motor 160, and the laser light source module is provided for emitting a light 131. Wherein, the laser light source module comprises a first color light source 110, a second color light source 120, and a bandpass filter 130. The first color light source 110, second color light source 120, bandpass filter 130, first periscope 140, grating module 150 and motor 160 are installed onto a bottom plate 101, and the bottom plate 101 comes with a relatively large area for carrying the aforementioned components, and these components are installed into a housing through the bottom plate 101. In an embodiment, the housing has a latch configured to be corresponsive to the bottom plate 101 to facilitate the installation of the bottom plate into the housing.

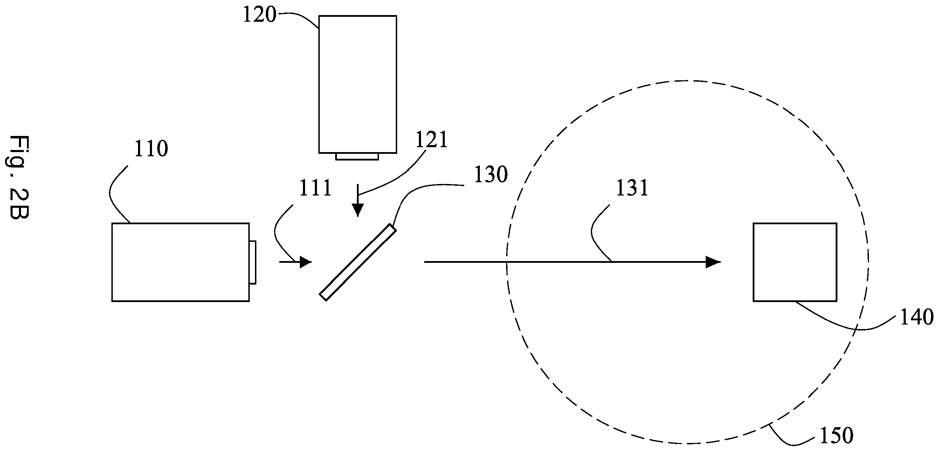

With reference to FIG. 2B for a top view of some components of the invention, the laser light source module has a first color light source 110 and a second color light source 120 which are laser machines in this embodiment and capable of emitting different color laser beams. The first color light source 110 is provided for emitting a first color light 111, and the second color light source 120 is provided for emitting a second color light 121. The first color light source 110 and the second color light source 120 are configured in different directions, so that the direction of the first color light 111 and the direction of the second color light 121 are also different. In this embodiment, the first color light source 110 is designed to be perpendicular to the second color light source 120. In addition, the first color light 111 is a red light, and the second color light 121 is a green light.

The bandpass filter 130 is installed along the emitting light path of the first color light source 110 and the second color light source 120 and provided for receiving the first color light 111 and the second color light 121, and the first color light 111 and the second color light 121 are mixed to form a light 131, and the light 131 is emitted to a first periscope 140. In this embodiment, the light 131 is a yellow light, and the bandpass filter 130 is installed with an angle of 45 degrees with respect to the path of the first color light 111 and the path of the second color light 121. In this embodiment, the first color light 111 and the second color light 121 are mixed to form a light 131 which is an orange light.

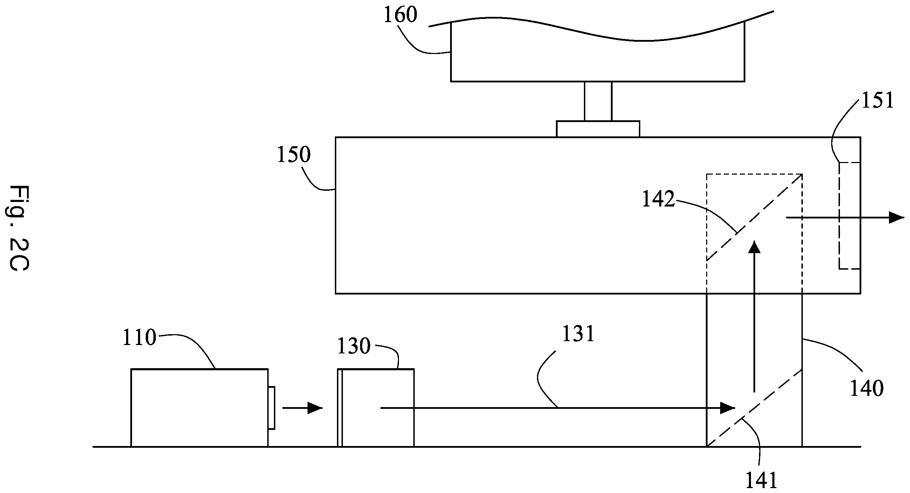

With reference to FIG. 2C for a side view of some components of the present invention, a first periscope 140 is installed on the emitting path of the light 131, and the light 131 is received by an end of the first periscope 140, and the other end of the first periscope 140 is penetrated deeply into the grating module 150. The grating module 150 is installed above the first periscope 140, and the grating module 150 is a ring structure, and the first periscope 140 guides the light 131 to an inner periphery of the grating module 150, so as to pass the light 131 through the grating sheet 151. In a preferred embodiment, the radial direction of the grating module 150 is parallel to the bottom plate 101.

The first periscope 140 comprises a first mirror 141 and a second mirror 142 installed therein. After the first mirror 141 receives the light 131, the light 131 is reflected upwardly to the second mirror 142, and the second mirror 142 receives the reflected light 131 and reflects the light 131 to the grating sheet 151 of the grating module 150.

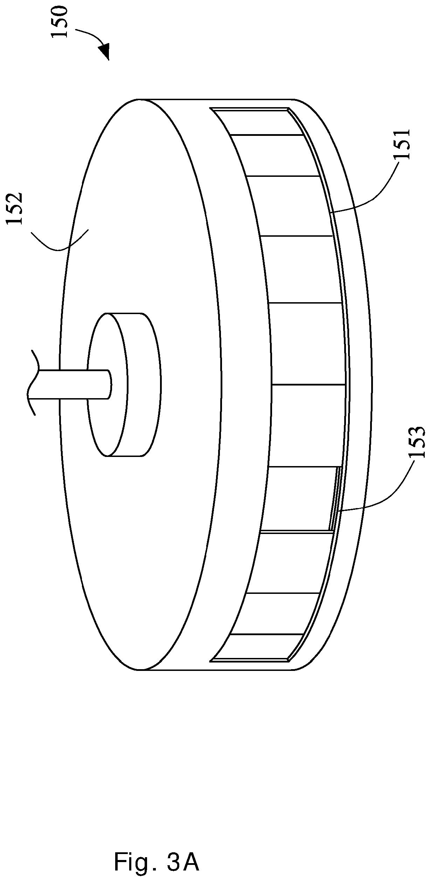

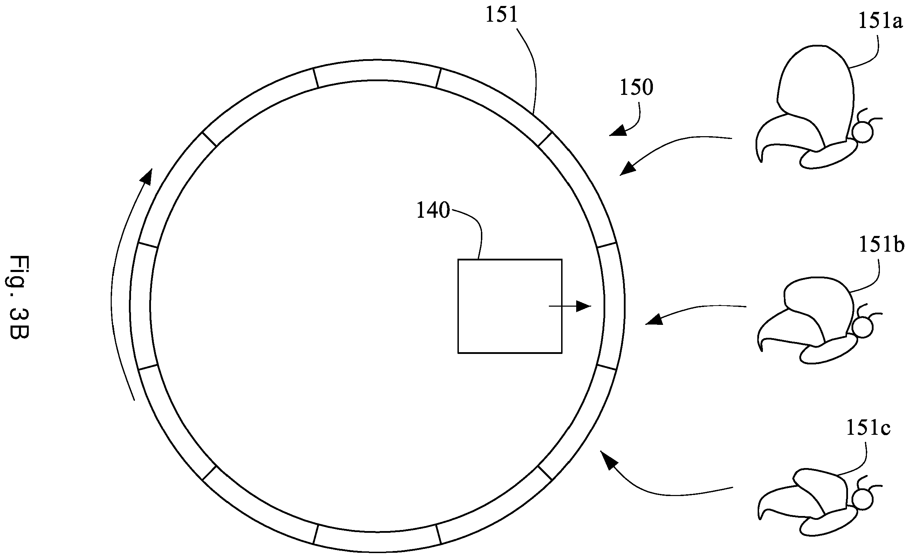

With reference to FIG. 3A for a schematic view of a grating module of an embodiment of the present invention, the grating module 150 is a circular ring structure having a cover structure 152 at the top, so that the whole grating module 150 is substantially a cover. Wherein, the grating module 150 further comprises a plurality of grating sheets 151 installed on a grating sheet rail 153 at an edge of the grating module 150, and the grating module 150 includes at least a grating sheet rail 153. With reference to FIG. 3B for a schematic view of installing the grating sheets, the grating sheets 151 are installed at an edge of the grating module 150, and each grating sheet 151 has a figure. The figures of each grating sheet 151 are continuous figures (such as butterfly figures 151a∼151c as shown in FIG. 3B). When the light 131 passes through the grating sheet 151, the figure of the grating sheet 151 can be projected to the outside. In a preferred embodiment, the grating sheet 151 is replaceable. In other words, the grating sheet 151 is detachable from the grating module 150 and may have different figures according to different requirements.

With reference to FIGS. 2C and 3B for a laser projection device of the invention, the laser projection device 100 further comprises a motor 160 coupled to the grating module 150 for rotating the grating module 150. The rotation of the grating module 150 allows the light 131 to pass each grating sheet 151, and the grating sheets 151 are continuous figures, so that the image projected by the laser projection device 100 is in an "animation" mode. In FIG. 3B, the grating module 150 is rotated clockwise, so that the light emitted from the first periscope 140 will pass through the grating sheets 151a∼151c sequentially. Therefore, the laser projection device 100 can project the animation images of a butterfly.

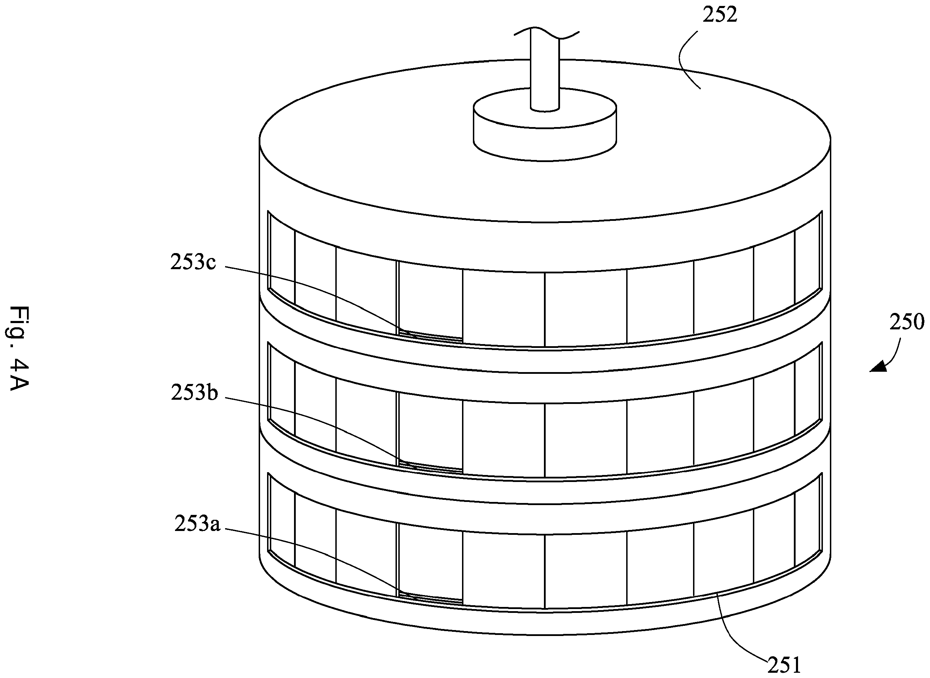

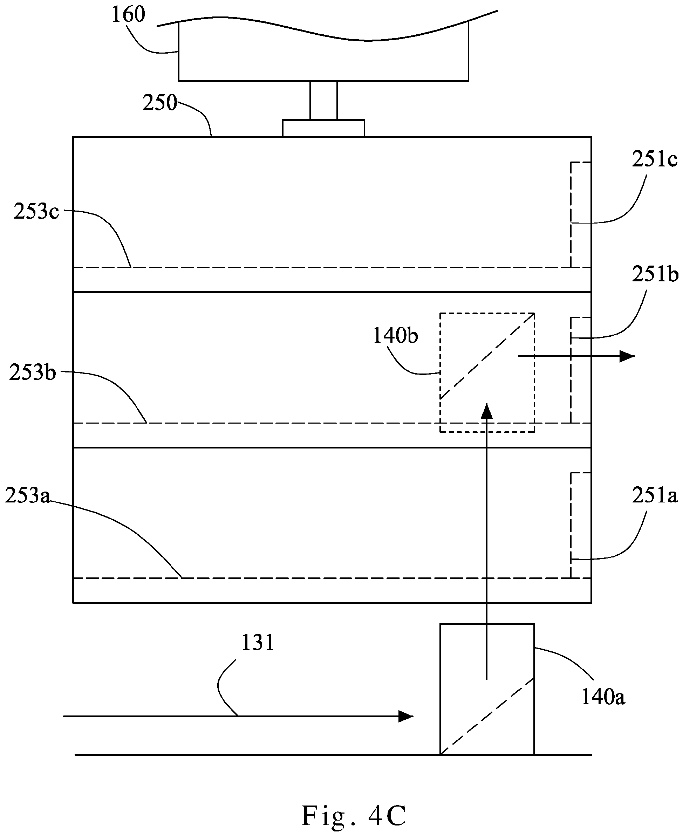

With reference to FIGS. 4A to 4C for a grating module in accordance with the second embodiment of the present invention, the grating module 250 comprises a plurality of grating sheet rails 253a∼253c, and the grating sheet rails 253a∼253c with a multilayer design is installed on the grating module 250. In other words, the grating module 250 has more grating sheet rails 253a∼253c for installing the grating sheets 251 to allow the laser projection device 100 to project a longer animation.

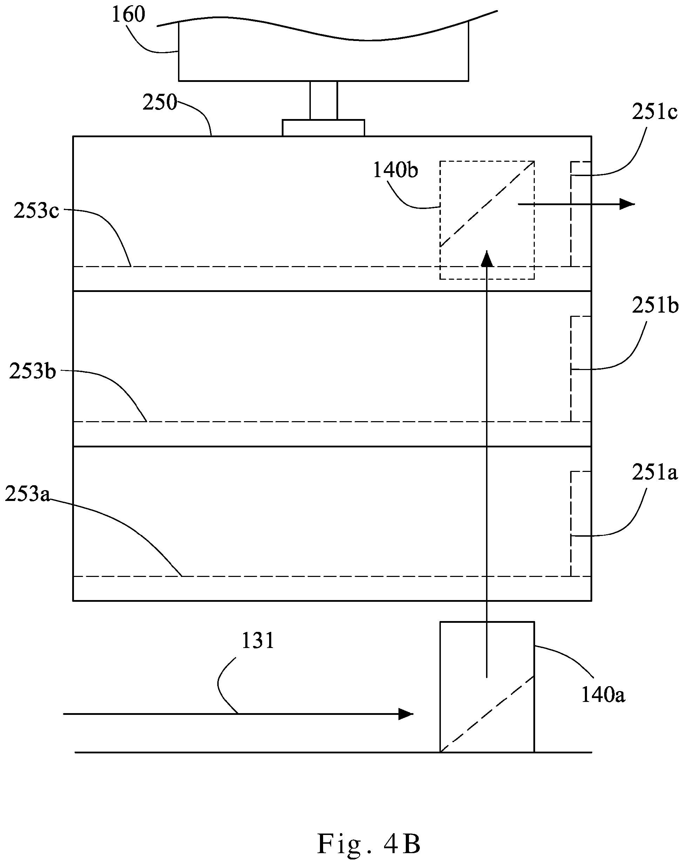

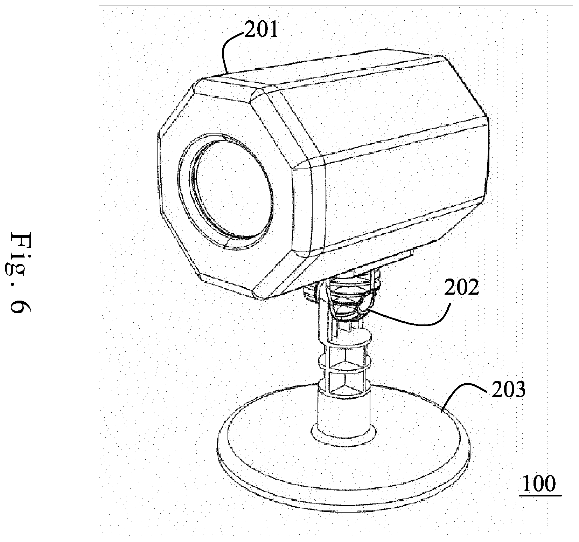

With reference to FIG. 4B for this embodiment, the first periscope 140 further comprises an entrance 140a and an exit 140b which are separated from each other. The entrance 140a is fixed onto the bottom plate 101 and the exit 140b is disposed above the entrance 140a, and a stepper motor is provided for controlling the shift of the exit 140b. The stepper motor is coupled to the exit 140b preferably by a gear mechanism. In FIG. 6B, the position of the exit 140b at the grating sheet rail 253c is designed to let the light 131 pass through the grating sheet 251c. In FIG. 6C, the exit 140b may be driven by the stepper motor and shifted to the position of the grating sheet rail 253b to let the light 131 pass through the grating sheet 251b. Therefore, the position of the exit 140b may be adjusted to let the light 131 pass through different grating sheets 251a∼251c, and the laser projection device 100 can project animation images of a longer time.

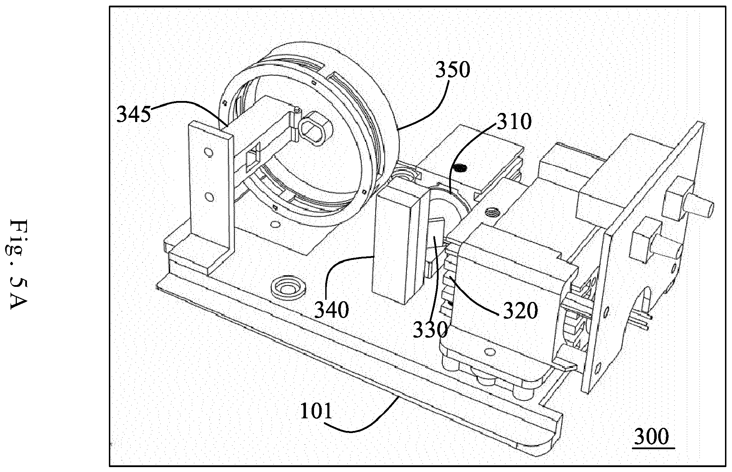

With reference to FIG. 5A for a schematic view of a laser projection device in accordance with the third embodiment of the present invention, the laser projection device 300 comprises a laser light source module, a first periscope 340, a second periscope 345 and a grating module 350 and the aforementioned components are installed onto a bottom plate 101. Wherein, the laser light source module comprises a first color light source 310, a second color light source 320, and a bandpass filter 330. The laser projection device of this embodiment is characterized in that the radial direction of the grating module 350 is perpendicular to the bottom plate 101, and the laser projection device 300 further comprises a second periscope 345 which is installed in a direction different from that of the first periscope 340, and an end of the second periscope 345 is extended into an inner edge of the grating module 350.

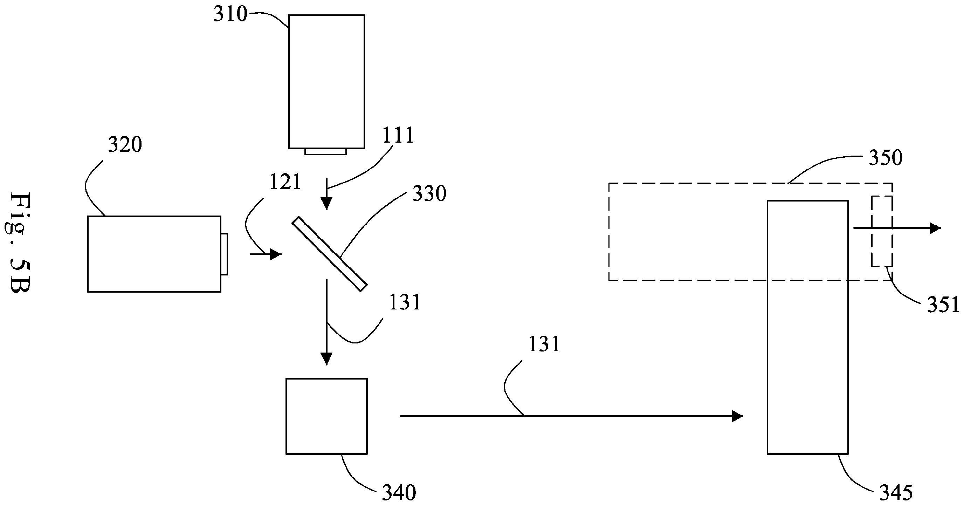

With reference to FIG. 5B for a top view of a laser projection device of the invention, the first color light source 310 and the second color light source 320 emit the first color light 111 and the second color light 121 to the bandpass filter 330 respectively, and the first color light 111 and second color light 121 are mixed to form a light 131, and the light 131 enters into the first periscope 340, and the first periscope 340 will lift and redirect the light 131 to the second periscope 345. The second periscope 345 will project the light 131 to the inner periphery of the grating module 350 to let the light 131 pass through the grating sheet 351 and produce a projected image.

In a preferred embodiment, the laser projection device 100 further comprises a plurality of heat sinks installed at the periphery of the first color light source 110 and the periphery of the second color light source 120. In the projection process, the first color light source 110 and the second color light source 120 operated for a long time will generate heat, so that the heat sinks installed at the periphery of the first color light source 110 and the periphery of the second color light source 120 can dissipate the heat to avoid overheat or damage caused by operating the first color light source 110 and the second color light source 120 for a long time. Wherein, the heat sink may be a cooling fin or a cooling fan.

With reference to FIG. 6 for a schematic view of a laser projection device housing of the present invention, the laser projection device 100 is covered inside the housing 201 and capable of projecting images. The housing 201 comprises a rotating device 202 and a base 203. The rotating device 202 is disposed under the housing 201 and coupled to the base 203, so that the housing 201 can be rotated by using the rotating device 202 as the center to adjust the projection angle of the laser projection device 100, and the base 203 is fixed to the laser projection device 100 and the housing 201. It is noteworthy that the aforementioned housing 201 of this embodiment is provided for the purpose of illustrating the present invention only, but not intended for limiting the shape of the housing 201, and persons having ordinary skill in the art should understand that the housing 201 may be designed in a different shape to meet different installation or appearance requirements.

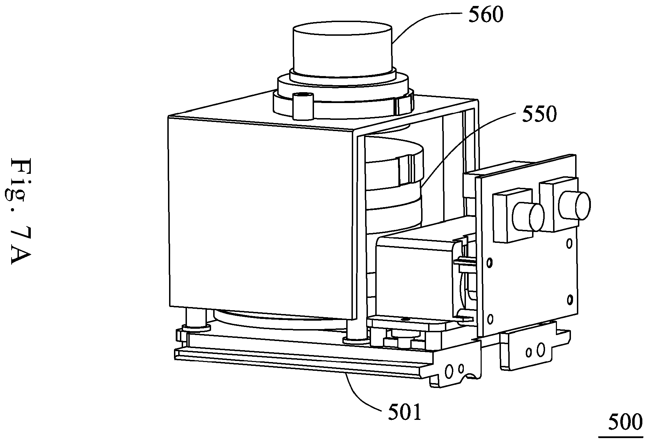

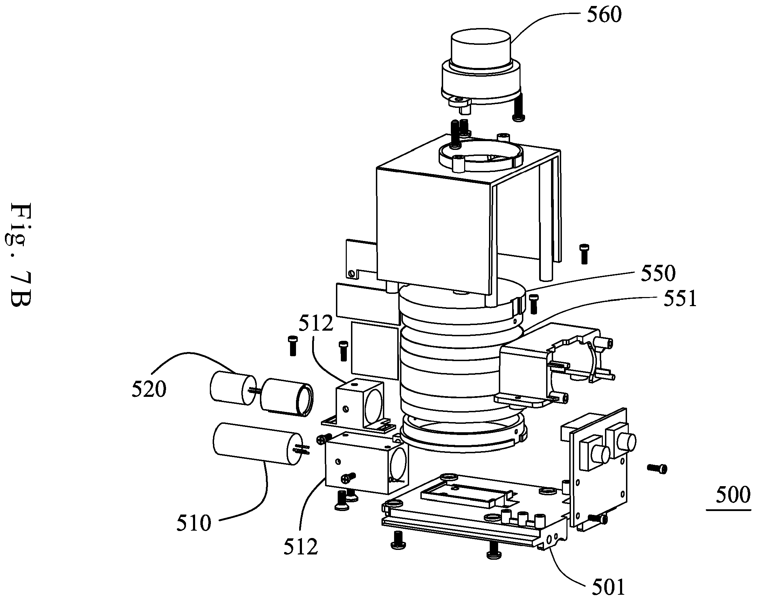

With reference to FIGS. 7A to 7C for a laser projection device in accordance with the fourth embodiment of the present invention, FIGS. 7A and 7B show the schematic view and exploded views of the laser projection device 500 of the fourth embodiment embodiments respectively. The laser projection device 500 comprises a grating module 550, a laser light source module and a motor 560. The grating module 550 is a ring structure comprising a grating sheet 551 installed at an edge of the grating module 550 and disposed circularly around the grating module 550. The grating sheet 551 has a plurality of figures which are continuous figures, and the grating sheet 551 is installed onto the grating module 550 continuously and sequentially according to the figures. In an embodiment, a plurality of grating sheets 551 may be used, and the figure of each grating sheet 551 is a continuous figure, and the plurality of grating sheets 551 are installed continuously and sequentially onto the grating module 550 according to the figure.

The laser light source module is provided for emitting at least a light and installed in the grating module 550, wherein the grating module 550 surrounds the laser light source module, and the light emitted by the laser light source module will pass through the grating sheet 551 to form a pattern 551'.

In this embodiment, the laser light source module comprises a first color light source 510 and a second color light source 520. The first color light source 510 is provided for emitting a first color light 511, and the second color light source 520 is provided for emitting a second color light 552, and the lights emitted by the laser light source modules are the first color light 511 and the second color light 552. Wherein, the laser light source module further comprises a plurality of heat sinks 512 installed at the periphery of the laser light source module. In other words, the first color light source 510 and the second color light source 520 are installed in the heat sinks. In addition, the heat sinks 512 are stacked on one another, so that the first color light source 510 and second color light source 520 are stacked with each other. The motor 560 is coupled to the grating module 550 for rotating the grating module 550.

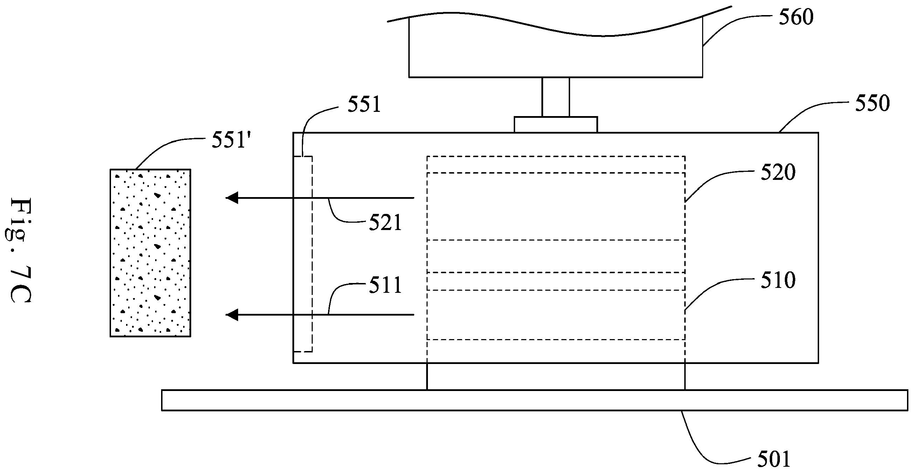

With reference to FIG. 7C for a schematic view of a laser projection of an embodiment of the invention, the first color light source 510 and the second color light source 520 are stacked on the bottom plate 501, and the grating module 550 is mounted onto the first color light source 510 and the second color light source 520 to allow the first color light 511 and the second color light 552 emitted by the first color light source 510 and the second color light source 520 respectively to pass through the grating sheet 551 from an inner side of the grating module 550 to form a pattern 551'. In addition, the motor 560 rotates the grating module 550, wherein the grating sheet 551 has a plurality of continuous figures, so that when the first color light 511 and the second color light 552 keep passing through the grating sheets 551, the continuous figure can be projected as a pattern 551' which gives the animation effect.

In this embodiment, the first color light source 510 and the second color light source 520 are vertically stacked with each other, so that the figure of the grating sheet 551 may be designed with double rails in order to project different patterns when the first color light source 510 and the second color light source 520 pass through the grating sheets 551 respectively, and the different color patterns 551 may be superimposed with each other to produce a more diversified animation pattern 551'.

Compared with the conventional laser projection device 10, the laser projection device 100 of the present invention comes with a design of the grating module 150, the grating sheet 151 and the motor 160 and achieves the animation projection effect by the continuous figures on the grating sheets 151. The laser projection device 100 completes the projection by passing the light through the grating sheet 151 once and effectively prevents a beam splitting phenomenon occurred during the projection of the light 131 to maintain the color of the light 131 and a good visual effect of the projection. While the invention has been described by means of specific embodiments, numerous modifications and variations could be made thereto by those skilled in the art without departing from the scope of the invention set forth in the claims.

## Claims

1. A projection device, comprising:
at least a light source module, provided for emitting a light;
a grating module (150), being a ring structure, further comprising a plurality of grating sheets (151) disposed at an edge of the grating module (150);
a first mean (140), for receiving the light and projecting the light to an inner periphery of the grating module (150), so that the light passes through the grating sheets (151); and
a motor (160), coupled to the grating module (150), for rotating the grating module (150);
each grating sheet (151) having a figure, and the figures of the grating sheets (151) form a continuous figure, by being set continuously and sequentially onto the grating module (150),
**wherein,**
the projection device is a laser projection device,
the at least a light source module is an at least a laser light source module,
the first mean (140) for receiving the light and for projecting the light to the inner periphery of the grating module (150), is a periscope (140), said periscope (140) being installed on the light path (131) of the light that is received from the at least a laser light source module and is configured to projects the light to the inner periphery of the grating module (150) along a light path which is not collinear with the light path (131), said at least a laser light source module and the grating module (150) being located on different height.

2. The laser projection device of claim 1, wherein the laser light source module comprises:
a first color light source (110), provided for emitting a first color light;
a second color light source (120), provided for emitting a second color light with a direction different from that of the first color light; and
a bandpass filter (130), for receiving the first color light and the second color light, and mixing the first color light and the second color light to form the light.

3. The laser projection device of claim 2, wherein the first color light source (110) and the second color light source (120) emit different color lights respectively.

4. The laser projection device of claim 3, wherein the first color light is a red light, the second color light is a green light, and the light formed by mixing the first color light and the second color light is an orange light.

5. The laser projection device of claim 1, further comprising a plurality of heat sinks.

6. The laser projection device of claim 1, wherein the grating module (150) further comprises at least a grating sheet rail (151) disposed at an edge of the grating module (150).

7. The laser projection device of claim 1, wherein the first periscope (140) further comprises an entrance (140a) and an exit (140b), and the laser projection device further comprises a stepper motor coupled to the exit (140b) and provided for shifting the exit (140b).

8. The laser projection device of claim 7, wherein the stepper motor is coupled to the exit (140b) through a gear mechanism.

9. The laser projection device of claim 1, further comprising a bottom plate (101), and the radial direction of the grating module (150) being parallel to the bottom plate (101).

10. The laser projection device of claim 1, further comprising a bottom plate (101), and the radial direction of the grating module (150) being perpendicular to the bottom plate (101).

11. The laser projection device of claim 10, further comprising a second periscope, and the first periscope (140) projecting the light to an inner periphery of the grating module (150) through the second periscope.

12. A projection device, comprising:
a grating module (150), being a ring structure, and further comprising a plurality of grating sheets (151) disposed at an edge of the grating module (150);
a light source module, provided for emitting at least a light, and
a motor (160), coupled to the grating module (150), for rotating the grating module (150);
wherein, each grating sheet (151) has a figure, and the figures of the grating sheets (151) form a continuous figure by being set continuously and sequentially onto the grating module,
**wherein,**
the projection device is a laser projection device,
the at least a light source module is an at least a laser light source module,
the grating module (150) surrounds the laser light source module, and the light passes the figures of the grating sheet (151) only one at a time.

13. The laser projection device of claim 12, wherein the laser light source module comprises a first color light source (110), provided for emitting a first color light; and a second color light source (120), provided for emitting a second color light.

14. The laser projection device of claim 12, further comprising a plurality of heat sinks disposed at the periphery of the laser light source module.

## Patentansprüche

1. Projektionsvorrichtung, umfassend:
mindestens ein Lichtquellenmodul, das zum Emittieren von Licht vorgesehen ist,
ein Gittermodul (150), das eine Ringstruktur ist und ferner eine Mehrzahl von Gitterplatten (151) umfasst, die an einem Rand des Gittermoduls (150) angeordnet ist;
ein erstes Mittel (140) zum Empfangen des Lichts und Projizieren des Lichts auf einen Innenumfang des Gittermoduls (150), so dass das Licht durch die Gitterplatten (151) durchtritt; und
einen Motor (160), der mit dem Gittermodul (150) gekoppelt ist, zum Drehen des Gittermoduls;
wobei jede Gitterplatte (151) eine Figur aufweist, und die Figuren der Gitterplatten (151) eine kontinuierliche Figur bilden, indem sie kontinuierlich und sequenziell auf das Gittermodul (150) gesetzt sind;
wobei
die Projektionsvorrichtung eine Laserprojektionsvorrichtung ist,
das mindestens eine Lichtquellenmodul mindestens ein Laserlichtquellenmodul ist,
das erste Mittel (140) zum Empfangen des Lichts und Projizieren des Lichts auf einen Innenumfang des Gittermoduls (150) ein Periskop (140) ist, wobei das Periskop (140) auf dem Lichtweg (131) des Lichts installiert ist, das von dem mindestens einen Laserlichtquellenmodul empfangen wird, und so konfiguriert ist, dass es das Licht entlang eines Lichtwegs, der nicht kollinear mit dem Lichtweg (131) ist, auf den Innenumfang des Gittermoduls (150) projiziert, wobei das mindestens eine Laserlichtquellenmodul und das Gittermodul (150) auf verschiedener Höhe angeordnet sind.

2. Laserprojektionsvorrichtung nach Anspruch 1, wobei das Laserlichtquellenmodul umfasst:
eine erste Farblichtquelle (110), die zum Emittieren eines ersten Farblichts vorgesehen ist;
eine zweite Farblichtquelle (120), die zum Emittieren eines zweiten Farblichts mit einer Richtung vorgesehen ist, die von der des ersten Farblichts verschieden ist; und
ein Bandpassfilter (130) zum Empfangen des ersten Farblichts und des zweiten Farblichts und Mischen des ersten Farblichts und des zweiten Farblichts, um das Licht zu bilden.

3. Laserprojektionsvorrichtung nach Anspruch 2, wobei die erste Farblichtquelle (110) und die zweite Farblichtquelle (120) jeweils verschiedene Farblichter emittieren.

4. Laserprojektionsvorrichtung nach Anspruch 3, wobei das erste Farblicht ein rotes Licht ist, das zweite Farblicht ein grünes Licht ist, und das Licht, das durch Mischen des ersten Farblichts und des zweiten Farblichts gebildet wird, ein oranges Licht ist.

5. Laserprojektionsvorrichtung nach Anspruch 1, ferner umfassend eine Mehrzahl von Wärmesenken.

6. Laserprojektionsvorrichtung nach Anspruch 1, wobei das Gittermodul (150) ferner mindestens eine Gitterplattenschiene (151) umfasst, die an einem Rand des Gittermoduls (150) angeordnet ist.

7. Laserprojektionsvorrichtung nach Anspruch 1, wobei das erste Periskop (140) ferner einen Eingang (140a) und einen Ausgang (140b) umfasst, und die Laserprojektionsvorrichtung ferner einen Schrittmotor umfasst, der mit dem Ausgang (140b) gekoppelt und zum Verschieben des Ausgangs (140b) vorgesehen ist.

8. Laserprojektionsvorrichtung nach Anspruch 7, wobei der Schrittmotor durch einen Zahnradmechanismus mit dem Ausgang (140b) gekoppelt ist.

9. Laserprojektionsvorrichtung nach Anspruch 1, ferner umfassend eine Bodenplatte (101), wobei die radiale Richtung des Gittermoduls (150) parallel zur Bodenplatte (101) ist.

10. Laserprojektionsvorrichtung nach Anspruch 1, ferner umfassend eine Bodenplatte (101), und wobei die radiale Richtung des Gittermoduls (150) senkrecht zur Bodenplatte (101) ist.

11. Laserprojektionsvorrichtung nach Anspruch 10, ferner umfassend ein zweites Periskop, und wobei das erste Periskop (140) das Licht durch das zweite Periskop auf einen Innenumfang des Gittermoduls (150) projiziert.

12. Projektionsvorrichtung, umfassend:
ein Gittermodul (150), das eine Ringstruktur ist und ferner eine Mehrzahl von Gitterplatten (151) umfasst, die an einem Rand des Gittermoduls (150) angeordnet sind;
ein Lichtquellenmodul, das zum Emittieren mindestens eines Lichts vorgesehen ist, und
einen Motor (160), der mit dem Gittermodul (150) gekoppelt ist, zum Drehen des Gittermoduls;
wobei jede Gitterplatte (151) eine Figur aufweist, und die Figuren der Gitterplatten (151) eine kontinuierliche Figur bilden, indem sie kontinuierlich und sequenziell auf das Gittermodul gesetzt sind;
wobei
die Projektionsvorrichtung eine Laserprojektionsvorrichtung ist,
das mindestens eine Lichtquellenmodul mindestens ein Laserlichtquellenmodul ist,
das Gittermodul (150) das Laserlichtquellenmodul umgibt, und das Licht nur einzeln durch die Figuren der Gitterplatten (151) durchtritt.

13. Laserprojektionsvorrichtung nach Anspruch 12, wobei das Laserlichtquellenmodul umfasst:
eine erste Farblichtquelle (110), die zum Emittieren eines ersten Farblichts vorgesehen ist; und
eine erste Farblichtquelle (120), die zum Emittieren eines zweiten Farblichts vorgesehen ist.

14. Laserprojektionsvorrichtung nach Anspruch 12, ferner umfassend eine Mehrzahl von Wärmesenken am Umfang des Laserlichtquellenmoduls.

## Revendications

1. Dispositif de projection, comprenant :
au moins un module de source de lumière, prévu pour émettre une lumière ;
un module de diffraction (150), qui est une structure annulaire, comprenant en outre une pluralité de plaques de diffraction (151) disposées au niveau d'un bord du module de diffraction (150) ;
un premier moyen (140) destiné à recevoir la lumière et à projeter la lumière vers une périphérie interne du module de diffraction (150), de sorte que la lumière passe à travers les plaques de diffraction (151) ; et
un moteur (160), couplé au module de diffraction (150), destiné à faire pivoter le module de diffraction (150) ;
chaque plaque de diffraction (151) ayant une figure, les figures des plaques de diffraction (151) formant une figure continue, en étant disposées en continu et séquentiellement sur le module de diffraction (150) ;
dans lequel
le dispositif de projection est un dispositif de projection laser,
le au moins un module de source de lumière est au moins un module de source de lumière laser,
le premier moyen (140) destiné à recevoir la lumière et à projeter la lumière vers la périphérie interne du module de diffraction (150) est un périscope (140), ledit périscope (140) étant installé sur le trajet lumineux (131) de la lumière qui est reçue de la part du au moins un module de source de lumière laser et étant configuré pour projeter la lumière vers la périphérie interne du module de diffraction (150) le long d'un trajet lumineux qui n'est pas colinéaire avec le trajet lumineux (131), ledit au moins un module de source de lumière laser et le module de diffraction (150) étant situés à une hauteur différente.

2. Dispositif de projection laser selon la revendication 1, dans lequel le module de source de lumière laser comprend :
une première source de lumière de couleur (110), prévue pour émettre une première lumière de couleur ;
une seconde source de lumière de couleur (120), prévue pour émettre une seconde lumière de couleur avec une direction différente de celle de la première lumière de couleur ; et
un filtre passe-bande (130), destiné à recevoir la première lumière de couleur et la seconde lumière de couleur, et à mélanger la première lumière de couleur et la seconde lumière de couleur afin de former la lumière.

3. Dispositif de projection laser selon la revendication 2, dans lequel la première source de lumière de couleur (110) et la seconde source de lumière de couleur (120) émettent des lumières de couleurs différentes respectivement.

4. Dispositif de projection laser selon la revendication 3, dans lequel la première lumière de couleur est une lumière rouge, la seconde lumière de couleur est une lumière verte, et la lumière formée en mélangeant la première lumière de couleur et la seconde lumière de couleur est une lumière orange.

5. Dispositif de projection laser selon la revendication 1, comprenant en outre une pluralité de dissipateurs thermiques.

6. Dispositif de projection laser selon la revendication 1, dans lequel le module de diffraction (150) comprend en outre au moins un rail de plaque de diffraction (151) disposé au niveau d'un bord du module de diffraction (150) .

7. Dispositif de projection laser selon la revendication 1, dans lequel le premier périscope (140) comprend en outre une entrée (140a) et une sortie (140b), et le dispositif de projection laser comprend en outre un moteur pas-à-pas couplé à la sortie (140b) et prévu pour décaler la sortie (140b).

8. Dispositif de projection laser selon la revendication 7, dans lequel le moteur pas-à-pas est couplé à la sortie (140b) par le biais d'un mécanisme d'engrenage.

9. Dispositif de projection laser selon la revendication 1, comprenant en outre une plaque inférieure (101), la direction radiale du module de diffraction (150) étant parallèle à la plaque inférieure (101).

10. Dispositif de projection laser selon la revendication 1, comprenant en outre une plaque inférieure (101), la direction radiale du module de diffraction (150) étant perpendiculaire à la plaque inférieure (101).

11. Dispositif de projection laser selon la revendication 10, comprenant en outre un second périscope, le premier périscope (140) projetant la lumière vers une périphérie interne du module de diffraction (150) par le biais du second périscope.

12. Dispositif de projection, comprenant :
un module de diffraction (150), qui est une structure annulaire, et comprenant en outre :
une pluralité de plaques de diffraction (151) disposées au niveau d'un bord du module de diffraction (150) ;
un module de source de lumière, prévu pour émettre au moins une lumière, et
un moteur (160), couplé au module de diffraction (150), destiné à faire pivoter le module de diffraction (150) ;
dans lequel chaque plaque de diffraction (151) possède une figure, les figures des plaques de diffraction formant une figure continue en étant disposées en continu et séquentiellement sur le module de diffraction,
dans lequel
le dispositif de projection est un dispositif de projection laser,
le au moins un module de source de lumière est un au moins un module de source de lumière laser,
le module de diffraction (150) entoure le module de source de lumière laser, et la lumière traverse les figures de la plaque de diffraction (151) une par une.

13. Dispositif de projection laser selon la revendication 12, dans lequel le module de source de lumière laser comprend
une première source de lumière de couleur (110), prévue pour émettre une première lumière de couleur ; et
une seconde source de lumière de couleur (120), prévue pour émettre une seconde lumière de couleur.

14. Dispositif de projection laser selon la revendication 12, comprenant en outre une pluralité de dissipateurs thermiques disposés au niveau de la périphérie du module de source de lumière laser.
